# EUROPEAN PATENT APPLICATION

(11) **EP 4 763 330 A1**
(43) Date of publication of application: **24.06.2026**
(21) Application number: 24853267.3
(22) Date of filing: 11.05.2024
(51) Int. Cl.: B01J 23/10, B01D 53/94

(54) **LOW-TEMPERATURE HIGH-PERFORMANCE OXYGEN STORAGE MATERIAL, PREPARATION METHOD, AND AUTOMOBILE TAIL GAS PURIFICATION CATALYST**

(30) Priority: 16.08.2023 CN 202311032821
(71) Applicant: Dongfeng Motor Group Co., Ltd., Wuhan, Hubei 430056 (CN)
(72) Inventor: ZHAO, Haoyuan, Wuhan, Hubei 430056 (CN); WANG, Xicheng, Wuhan, Hubei 430056 (CN); XIONG, Fen, Wuhan, Hubei 430056 (CN); CHEN, Chao, Wuhan, Hubei 430056 (CN); DAI, Liliang, Wuhan, Hubei 430056 (CN)
(74) Representative: Gille Hrabal Partnerschaftsgesellschaft mbB Patentanwälte
(86) International application number: PCT/CN2024/092576
(87) International publication number: WO 2025/035851

(57) **Abstract**

The present application relates to a low-temperature high-performance oxygen storage material, a preparation method, and an automobile tail gas purification catalyst. The preparation method comprises: preparing a solution A1, wherein the solution A1 contains cerium, zirconium, and a metal modified doping element; preparing a solution A2, wherein the solution A2 contains ammonium carbonate and ammonia water; using a silane coupling agent to modify nanoparticles to obtain a slurry A3; jointly titrating and precipitating the solution A1, the solution A2, and the slurry A3, and when titration is completed, adding concentrated ammonia water and stirring to obtain a slurry B; sequentially performing low-temperature aging treatment and high-temperature aging treatment on the slurry B to obtain a slurry C; heating the slurry C to a set temperature, then adding concentrated ammonia water and a surfactant into the slurry C, and performing a stirring reaction to obtain a slurry D; and performing suction filtration and washing on the slurry D, and drying and roasting a filter cake obtained by suction filtration and washing, to obtain a low-temperature high-performance oxygen storage material. The present application can solve the problems in the related art of relatively poor low-temperature reaction activity of an oxygen storage material, and the incapability of dealing with low-temperature ignition when a hybrid vehicle type frequently starts and stops.

## Description

### Field of the Invention

The present application relates to the technical field of automobile tail gas purification treatment, and in particular to a low-temperature high-performance oxygen storage material, a preparation method, and an automobile tail gas purification catalyst.

### Background of the Invention

An automobile tail gas purification catalyst is a primary strategy for converting pollutants such as carbon monoxide, hydrocarbons, and nitrogen oxides into non-toxic gases such as carbon dioxide and water vapor. The automobile tail gas purification catalyst generally comprises a honeycomb carrier and a catalytic coating layer, wherein the catalytic coating mainly consists of catalyst materials, such as rare earth oxygen storage materials, aluminum oxide, and precious metal active components. The rare earth oxygen storage materials store oxygen under lean-burn conditions and release oxygen under rich-burn conditions, thereby broadening the operating window of the three-way catalyst and achieving efficient and complete conversion of CO, HC, and NOx. Currently, commonly used oxygen storage materials are cerium-zirconium solid solutions, and doping with appropriate amounts of rare earth elements, alkali metals, and transition metals is beneficial for improving the thermal stability, oxygen storage capacity, and redox performance of the cerium-zirconium solid solutions.

Current research focuses on the precise regulation of preparation conditions for oxygen storage materials, comprising controlling the precipitation pH, aging conditions, post-treatment conditions, and the properties of added surfactants. The main methods for preparing the cerium-zirconium solid solutions comprise co-precipitation, sol-gel, hydrothermal, and high-energy ball milling methods. Among these methods, the co-precipitation method has been widely applied due to its simple process, easily controllable conditions, and suitability for industrial-scale production. However, existing co-precipitation methods are diverse, and the properties of the resulting cerium-zirconium solid solutions cannot fully meet the requirements of automotive tail gas after-treatment modules in certain aspects, such as high-temperature resistance needing further improvement, and the oxygen storage capacity, thermal stability, and specific surface area not being perfectly balanced simultaneously. In addition, with the advancement of the "dual-carbon" goals, the market share of hybrid vehicles is continuously increasing, and the emission requirements for hybrid engines have put forward new demands on the oxygen storage materials. For the hybrid vehicles, in order to achieve optimal fuel economy, the engine undergoes more frequent start-stop operations during vehicle operation compared with traditional fuel vehicles, resulting in frequent start-stop events and numerous transient operating conditions. This requires the oxygen storage materials to not only exhibit excellent high-temperature oxygen storage and release performance, but also possess good reaction activity under low-temperature conditions.

Related art, such as CN105642269B, discloses a composite cerium-zirconium solid solution and a preparation method thereof, which is composed of cerium oxide, zirconium oxide, and a rare earth additive, with the following weight percentages: 15-80 wt% of cerium oxide, 15-60 wt% of zirconium oxide, and 5-25 wt% of the rare earth additive, wherein the rare earth additive is one or more of lanthanum oxide, praseodymium oxide, rubidium oxide, yttrium oxide, samarium oxide, terbium oxide, dysprosium oxide, and erbium oxide. Through modification with a composite surfactant and carbonization roasting treatment, the composite cerium-zirconium solid solution is provided with a relatively large pore size and pore volume. However, in this method, hydrogen peroxide is adopted to oxidize the rare earth-zirconium mixed solution during the precipitation process, which may affect the microstructure, redox properties, and oxygen storage and release capacity of the cerium-zirconium composite oxide.

In summary, although the prior art has improved the specific surface area and high-temperature aging performance of the oxygen storage materials to a relatively high level, the low-temperature reaction activity of the oxygen storage materials remains relatively poor, making it difficult to cope with low-temperature light-off during frequent start-stop cycles of the hybrid vehicles.

### Summary of the Invention

The embodiments of the present application provide a low-temperature high-performance oxygen storage material, a preparation method, and an automobile tail gas purification catalyst so as to solve the problem in the related art of relatively poor low-temperature reaction activity of the oxygen storage material and the inability to achieve low-temperature light-off during frequent start-stop cycles of the hybrid vehicles.

In a first aspect, a preparation method of a low-temperature high-performance oxygen storage material is provided, which comprises the following steps:
preparing a solution A1, wherein the solution A1 comprises cerium, zirconium, and a metal modified doping element for modifying the cerium and the zirconium;
preparing a solution A2, wherein the solution A2 comprises ammonium carbonate and ammonia water;
utilizing a silane coupling agent to modify nanoparticles to obtain a slurry A3;
jointly titrating and precipitating the solution A1, the solution A2, and the slurry A3, and after completion of the titration, adding concentrated ammonia water and stirring to obtain a slurry B;
successively performing low-temperature aging treatment and high-temperature aging treatment on the slurry B to obtain a slurry C;
heating the slurry C to a set temperature, then adding concentrated ammonia water and a surfactant into the slurry C, and performing a stirring reaction to obtain a slurry D; and
performing suction filtration and washing on the slurry D, and drying and roasting a filter cake obtained by the suction filtration and washing, to obtain the low-temperature high-performance oxygen storage material.

In some embodiments, in the low-temperature high-performance oxygen storage material, by weight fraction, a content of cerium oxide is 20-60 wt%, a content of zirconium oxide is 30-70 wt%, a content of a metal-modified doping additive is 3-15 wt%, and a content of nanoparticles is 0.1-3 wt%.

In some embodiments, the step of preparing the solution A1 specifically comprises:
dissolving a soluble cerium salt in hydrogen peroxide, dissolving a soluble zirconium salt in an aqueous nitric acid solution, dissolving a soluble salt of the metal-modified doping element in hydrogen peroxide, and then mixing and stirring uniformly to obtain the solution A1.

In some embodiments, the soluble cerium salt comprises cerium nitrate and/or cerium carbonate;
the soluble zirconium salt comprises zirconium nitrate and/or zirconium carbonate; and
the soluble salt of the metal-modified doping element comprises a nitrate and/or a carbonate of the metal-modified doping element.

In some embodiments, the metal-modified doping element comprises one or more of an aluminum element, a rare earth element, a transition metal element, an alkali metal element, and an alkaline earth metal element.

In some embodiments, the step of preparing the solution A2 specifically comprises:
dissolving the ammonium carbonate in water to obtain an ammonium carbonate solution; and
mixing the ammonium carbonate solution with the ammonia water to obtain the solution A2.

In some embodiments, a molar ratio of the ammonium carbonate solution to the ammonia water is (0.5~2):1.

In some embodiments, the step of utilizing the silane coupling agent to modify nanoparticles to obtain the slurry A3 specifically comprises:
adding the nanoparticles into a solvent and performing ultrasonic dispersion, then adding the silane coupling agent and performing ultrasonic treatment again to obtain the slurry A3, wherein an amount of the silane coupling agent added is 0.5-2 wt% of the mass of the nanoparticles.

In some embodiments, the nanoparticles comprise nanosilica and/or nano α-alumina powder.

In some embodiments, the nanoparticles have an average particle size of 5~30 nm.

In some embodiments, the silane coupling agent comprises an aminoalkyl-type silane coupling agent.

In some embodiments, the aminoalkyl-type silane coupling agent comprises one or more of γ-aminopropyltrimethoxysilane, γ-aminopropyltriethoxysilane, γ-ureapropyltriethoxysilane, and γ-(β-aminoethyl)aminopropyltrimethoxysilane.

In some embodiments, the low-temperature aging treatment comprises aging at 15-25 °C for 3-8 hours.

In some embodiments, the high-temperature aging treatment comprises aging at 90-98 °C for 2-5 hours.

In some embodiments, the set temperature is 50-70 °C.

In some embodiments, the surfactant is a mixture of a fatty acid and polyvinyl alcohol, or a mixture of a carboxylate ester and polyvinyl alcohol.

In some embodiments, the fatty acid comprises one or more of lauric acid, palmitic acid, stearic acid, and oleic acid; and
the carboxylate ester comprises one or more of Tween 20, Tween 60, and Tween 80.

In some embodiments, the roasting comprises heating at a rate of 5-20 °C/min to 400-800 °C, followed by roasting for 3-6 hours.

In a second aspect, a low-temperature high-performance oxygen storage material is provided, which is prepared by the preparation method of the low-temperature high-performance oxygen storage material according to any one of the foregoing aspects.

In a third aspect, an automobile tail gas purification catalyst is provided, which comprises the low-temperature high-performance oxygen storage material described above.

The beneficial effects brought by the technical solution provided in the present application comprise:
the embodiments of the present application provide a low-temperature high-performance oxygen storage material, a preparation method, and an automobile tail gas purification catalyst. Beyond early efforts to improve oxygen storage material performance through adjusting the cerium-zirconium ratio and selecting suitable doping additives, current research focuses on the precise regulation of the preparation conditions for oxygen storage materials, comprising controlling the precipitation pH, aging conditions, post-treatment conditions, and the properties of added surfactants. For example, different precipitants result in different nucleation rates of the nanocrystals and different decomposition rates during the roasting process, thereby regulating the initial grain size of the nanocrystals; and the basic effect of the aging process-crystal structure refinement (small grains dissolve while large grains grow)-is utilized to optimize the aging conditions and further control the initial grain size of the nanocrystals.

The present application innovatively proposes introducing modified nanoparticles as nucleation sites for cerium-zirconium nanocrystals during the co-precipitation stage, enabling heterogeneous nucleation of the cerium-zirconium precipitate, thereby controlling the nucleation and growth of the oxygen storage material and obtaining an oxygen storage material with high oxygen storage capacity and excellent high-temperature aging resistance; and at the same time, it is unexpectedly found that the oxygen storage material prepared by this method also exhibits excellent oxygen storage and release performance (i.e., reaction activity) under low-temperature conditions (as low as 250 °C), which is of significant importance for meeting the emission requirements of the hybrid vehicles. Compared with conventional methods that require precise control of preparation parameters such as pH, aging conditions, and post-treatment conditions, the introduction of the modified nanoparticles can significantly reduce the processing difficulty of the oxygen storage material and improve product consistency.

Nanoparticles serve as nucleation sites for cerium-zirconium nanocrystals; however, aggregation tends to occur. Therefore, the purpose of modification is to prevent nanoparticles agglomeration and promote dispersion, which facilitates the nucleation and growth of the oxygen storage material, and additionally, the introduction of silicon further enhances the performance of the oxygen storage material.

The applicant has found through extensive research that modified silica and α-alumina can achieve the aforementioned effects, and experiments show that corresponding modified γ-alumina does not perform as effectively, possibly because of its poor thermal stability, which leads to phase transformation and sintering during the roasting process, causing structural collapse and performance degradation of the oxygen storage material.

In the present application, after completion of the low-temperature aging treatment and the high-temperature aging treatment, cooling is performed to room temperature. Compared with room-temperature aging in the prior art, selecting low-temperature aging first reduces nucleation of the cerium-zirconium compound itself and favors nucleation on the modified nanoparticles, and a period of low-temperature aging allows uniform nucleation and growth of all grains in the system.

The present application adopts the aminoalkyl-type silane coupling agent which undergoes thermal decomposition during subsequent roasting without introducing other impurities, and gases generated from the decomposition facilitate the formation of a porous structure.

The oxygen storage performance of a Ce-Zr oxygen storage material originates from the reversible redox (oxygen storage and release) cycle between Ce³⁺ and Ce⁴⁺, which is fundamentally determined by the unique electronic configuration of Ce. In fact, the oxygen storage and release process of the Ce-Zr oxygen storage material proceeds stepwise in a surface-to-bulk sequence. The filling of surface oxygen vacancies by gaseous oxygen occurs rapidly even at room temperature; therefore, the key steps determining the oxygen storage performance of the Ce-Zr oxygen storage material are the formation of oxygen vacancies and the migration and diffusion of oxygen species. The role of introducing the metal-modified doping element is as follows: 1) the introduced doping ions substitute for Ce⁴⁺ and Zr⁴⁺ in the lattice, and due to the difference in ionic radii between the doping ions and Ce⁴⁺/Zr⁴⁺, unit cell contraction or expansion occurs, which leads to the formation of cation-related structural defects; 2) since the valence of the doping ions is lower (typically +2 or +3), the need to maintain charge neutrality generates additional oxygen vacancies in the lattice; 3) the phase structure can be effectively stabilized, the sintering rate of the material can be reduced, and the thermal stability can be enhanced; and 4) the specific surface area of the material can be increased.

### Brief Description of the Drawings

In order to better illustrate the technical solution in the embodiments of the present application, the following will briefly introduce the drawings needed in the description of the embodiments, and it is obvious that the drawings in the following description are part of embodiments of the present application, for those of ordinary skill in the art, other drawings may also be obtained based on these drawings without any inventive effort.

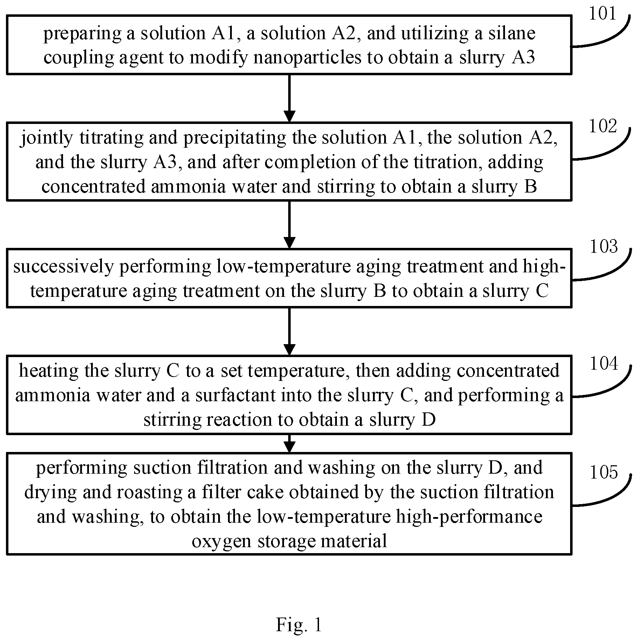

Fig. 1 is a flow chart of a method for preparing a low-temperature high-performance oxygen storage material in the embodiment of the present application.

### Detailed Description of the Embodiments

In order to make the purpose, technical solutions and advantages of the embodiments of the present application clearer, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by those of ordinary skill in the art without inventive efforts shall fall within the protection scope of the present application.

Beyond early efforts to improve oxygen storage material performance through adjusting the cerium-zirconium ratio and selecting suitable doping additives, current research focuses on the precise regulation of preparation conditions for oxygen storage materials, comprising controlling the precipitation pH, aging conditions, post-treatment conditions, and the properties of added surfactants. For example, different precipitants result in different nucleation rates of the nanocrystals and different decomposition rates during the roasting process, thereby regulating the initial grain size of the nanocrystals; and the basic effect of the aging process-crystal form perfection (small grains dissolve while large grains grow)-is utilized to optimize the aging conditions and further control the initial grain size of the nanocrystals.

The present application innovatively proposes introducing modified nanoparticles as nucleation sites for cerium-zirconium nanocrystals during the co-precipitation stage, enabling heterogeneous nucleation of the cerium-zirconium precipitate, thereby controlling the nucleation and growth of the oxygen storage material and obtaining an oxygen storage material with high oxygen storage capacity and excellent high-temperature aging resistance; and at the same time, it is unexpectedly found that the oxygen storage material prepared by this method also exhibits excellent oxygen storage and release performance (i.e., reaction activity) under low-temperature conditions (as low as 250 °C), which is of significant importance for meeting the emission requirements of the hybrid vehicles. Compared with conventional methods that require precise control of preparation parameters such as pH, aging conditions, and post-treatment conditions, the introduction of the modified nanoparticles can significantly reduce the processing difficulty of the oxygen storage material and improve product consistency.

Specifically, as shown in Fig. 1, the embodiment of the present application provides a preparation method of a low-temperature high-performance oxygen storage material, which comprises the following steps:
S101. A solution A1 is prepared, and the solution A1 comprises cerium, zirconium, and a metal modified doping element for modifying the cerium and the zirconium.

A solution A2 is prepared, and the solution A2 comprises ammonium carbonate and ammonia water.

A silane coupling agent is utilized to modify nanoparticles to obtain a slurry A3.

S102. The solution A1, the solution A2, and the slurry A3 are jointly titrated and precipitated, and after completion of the titration, concentrated ammonia water is added and stirred to obtain a slurry B.

In S102, the titration is performed at a temperature of 30-40 °C, that is, the solution A1, the solution A2, and the slurry A3 are titrated at 30-40 °C. After the addition of concentrated ammonia water, stirring is performed for 1-2 h to ensure thorough mixing.

The concentrated ammonia water has a conventional concentration, for example 25-28%, and mainly provides hydroxyl groups and regulates the pH so as to enable complete precipitation of metal ions; and the use of ammonia water avoids the introduction of additional metal ions.

S103: Low-temperature aging treatment and high-temperature aging treatment are performed on the slurry B successively to obtain a slurry C.

The low-temperature aging treatment comprises aging at 15-25 °C for 3-8 hours.

The high-temperature aging treatment comprises aging at 90-98 °C for 2-5 hours.

After completion of the low-temperature aging treatment and the high-temperature aging treatment, cooling is performed to room temperature. Compared with room-temperature aging in the prior art, selecting low-temperature aging first reduces nucleation of the cerium-zirconium compound itself and favors nucleation on the modified nanoparticles, and a period of low-temperature aging allows uniform nucleation and growth of all grains in the system.

S104: After the slurry C is heated to a set temperature, concentrated ammonia water and a surfactant are added into the slurry C, and a stirring reaction is performed to obtain a slurry D.

The set temperature is 50-70 °C. After stirring the reaction for 1-3 h, the mixture is cooled to room temperature.

The set temperature is 50-70 °C because the surfactant will be added subsequently, on one hand, the surface tension of water within the pores of the material is reduced by lowering the interfacial energy, thereby significantly reducing shrinkage and collapse of the network structure during the drying and roasting process; and on the other hand, the surfactant acts as a dispersant, adsorbing onto the surfaces of solid particles; when the adsorption layer reaches a certain thickness, it generates sufficient repulsive energy to overcome the attractive forces between particles, thereby achieving a dispersion effect. Therefore, a relatively suitable temperature is required: if the temperature is too low, the adsorption process becomes prolonged, while if the temperature is too high, the structure becomes unstable.

The concentrated ammonia water has a conventional concentration, for example 25-28%, and mainly provides hydroxyl groups and regulates the pH so as to enable complete precipitation of metal ions; and the use of ammonia water avoids the introduction of additional metal ions.

The surfactant is a mixture of a fatty acid and polyvinyl alcohol, or a mixture of a carboxylate ester and polyvinyl alcohol.

The fatty acid comprises one or more of lauric acid, palmitic acid, stearic acid, and oleic acid; and
the carboxylate ester comprises one or more of Tween 20, Tween 60, and Tween 80.

S105: Suction filtration and washing are performed on the slurry D, and a filter cake obtained by the suction filtration and washing is dried and roasted to obtain a low-temperature high-performance oxygen storage material.

The roasting comprises heating at a rate of 5-20 °C/min to 400-800 °C, followed by roasting for 3-6 hours.

Due to the introduction of nanoparticles for nucleation, compared with conventional co-precipitation methods, the present application requires a low-temperature aging step after precipitation titration to facilitate nucleation of the cerium-zirconium nanocrystals, prevent or suppress rapid crystal growth, and avoid formation of non-uniform particles.

In the low-temperature high-performance oxygen storage material, by weight fraction, a content of cerium oxide is 20-60 wt%, a content of zirconium oxide is 30-70 wt%, a content of a metal-modified doping additive is 3-15 wt%, and a content of nanoparticles is 0.1-3 wt%.

It should be noted that the metal-modified doping additive is a product obtained through reacting the soluble salt of the metal-modified doping element, and is incorporated into the low-temperature high-performance oxygen storage material.

In S101, a preparation method is further provided to obtain the solution A1. Specifically, the preparation of the solution A1 comprises the following steps: weighing the soluble cerium salt, the soluble zirconium salt, and the soluble salt of the metal-modified doping element; dissolving the soluble cerium salt in hydrogen peroxide, dissolving the soluble zirconium salt in an aqueous nitric acid solution, and dissolving the soluble salt of the metal-modified doping element in hydrogen peroxide; then mixing the three solutions and stirring thoroughly to obtain the solution A1.

There are various options for the soluble cerium salt, which can be selected according to actual needs. For example, as an illustration, the soluble cerium salt may comprise cerium nitrate and/or cerium carbonate.

There are various options for the soluble zirconium salt, which can be selected according to actual needs. For example, as an illustration, the soluble zirconium salt may comprise zirconium nitrate and/or zirconium carbonate.

There are various options for the soluble salt of the metal-modified doping element, which can be selected according to actual needs. For example, as an illustration, the soluble salt of the metal-modified doping element may comprise the nitrate and/or carbonate of the metal-modified doping element.

There are various options for the metal-modified doping element, which can be selected according to actual needs. For example, as an illustration, the metal-modified doping elements may comprise one or more of an aluminum element, a rare earth element, a transition metal element, an alkali metal element, and an alkaline earth metal element.

The rare earth element comprises one or more of lanthanum (La), praseodymium (Pr), neodymium (Nd), and yttrium (Y).

The transition metal element comprises one or more of manganese (Mn), copper (Cu), iron (Fe), and nickel (Ni).

The alkaline earth metal element comprises one or more of strontium (Sr), calcium (Ca), magnesium (Mg), and barium (Ba).

The oxygen storage performance of a Ce-Zr oxygen storage material originates from the reversible redox (oxygen storage and release) cycle between Ce³⁺ and Ce⁴⁺, which is fundamentally determined by the unique electronic configuration of Ce. In fact, the oxygen storage and release process of the Ce-Zr oxygen storage material proceeds stepwise in a surface-to-bulk sequence. The filling of surface oxygen vacancies by gaseous oxygen occurs rapidly even at room temperature; therefore, the key steps determining the oxygen storage performance of the Ce-Zr oxygen storage material are the formation of oxygen vacancies and the migration and diffusion of oxygen species.

The role of introducing the metal-modified doping element is as follows:
1) the introduced doping ions substitute for Ce⁴⁺ and Zr⁴⁺ in the lattice, and due to the difference in ionic radii between the doping ions and Ce⁴⁺/Zr⁴⁺, unit cell contraction or expansion occurs, which leads to the formation of cation-related structural defects;
2) since the valence of the doping ions is lower (typically +2 or +3), the need to maintain charge neutrality generates additional oxygen vacancies in the lattice;
3) the phase structure can be effectively stabilized, the sintering rate of the material can be reduced, and the thermal stability can be enhanced; and
4) the specific surface area of the material can be increased.

In S101, a preparation method is further provided to obtain the solution A2. Specifically, the preparation of the solution A2 comprises the following steps: dissolving the ammonium carbonate in water to obtain an ammonium carbonate solution; and mixing the ammonium carbonate solution with the ammonia water to obtain the solution A2.

The water mentioned above can be deionized water, distilled water, or purified water.

The molar ratio of the ammonium carbonate solution to the ammonia water is (0.5~2):1.

The molar concentrations of the ammonium carbonate and the ammonia water are each 1-5 mol/L.

In S101, a modification method is further provided to obtain the slurry A3. Specifically, the step of utilizing the silane coupling agent to modify the nanoparticles to obtain the slurry A3 comprises: adding the nanoparticles to a solvent and performing ultrasonic dispersion, then adding the silane coupling agent and performing ultrasonic treatment (for example, 5-10 minutes) to obtain the slurry A3. The amount of the silane coupling agent added is 0.5-2 wt% of the mass of the nanoparticles. The nanoparticles serve as nucleation sites for cerium-zirconium nanocrystals; however, aggregation tends to occur. Therefore, the purpose of modification is to prevent nanoparticles agglomeration and promote dispersion, which facilitates the nucleation and growth of the oxygen storage material, and additionally, the introduction of silicon further enhances the performance of the oxygen storage material.

The solvent is a mixture of ethanol and water in a volume ratio of (2-8):1.

The ultrasonic dispersion time can be determined according to actual needs, mainly to achieve as uniform a dispersion of nanoparticles in the solvent as possible. For example, the ultrasonic dispersion can be performed for 3-5 minutes.

The nanoparticles comprise nanosilica and/or nano α-alumina powder.

The applicant has found through extensive research that modified silica and α-alumina can achieve the aforementioned effects, and experiments show that corresponding modified γ-alumina does not perform as effectively, possibly because of its poor thermal stability, which leads to phase transformation and sintering during the roasting process, causing structural collapse and performance degradation of the oxygen storage material.

The average particle size of the nanoparticles is 5~30 nm. When below 5 nm, the nanoparticles tend to aggregate and form clusters, which is difficult to suppress even with modification; and when above 30 nm, the nanoparticles themselves have a relatively large volume, making the nanoparticles unsuitable as nucleation sites.

The silane coupling agent comprise an aminoalkyl-type silane coupling agent. There are various options for the aminoalkyl-type silane coupling agent, which can be selected according to actual preparation needs. For example, as an illustration, the aminoalkyl-type silane coupling agent may comprise one or more of γ-aminopropyltrimethoxysilane, γ-aminopropyltriethoxysilane, γ-ureidopropyltriethoxysilane, and γ-(β-aminoethyl)aminopropyltrimethoxysilane.

The present application adopts the aminoalkyl-type silane coupling agent which undergoes thermal decomposition during subsequent roasting without introducing other impurities, and gases generated from the decomposition facilitate the formation of a porous structure.

The embodiment of the present application further provides a low-temperature high-performance oxygen storage material, which is prepared by the preparation method of the low-temperature high-performance oxygen storage material.

The embodiment of the present application further provides an automobile tail gas purification catalyst, which comprises the low-temperature high-performance oxygen storage material.

The present application is described in detail below with reference to several embodiments and comparative embodiments.

### Characterization Methods

### 1. Specific Surface Area Characterization

The catalysts of each embodiment are subjected to specific surface area measurement both in the freshly prepared state (before aging) and after high-temperature aging at 1000 °C (after aging). The testing method is as follows: first, the sample is pretreated under vacuum at 300 °C for 3 h, then high-purity N₂ is used as the adsorptive gas for adsorption testing at -196 °C (liquid nitrogen) and desorption testing at 25 °C. The specific surface area of the sample is calculated using the BET method (Autosorb SI fully automatic surface area and pore size analyzer, Quantachrome). Specific Surface Area Retention (%) = Specific surface area after aging/Specific surface area before aging × 100%.

### 2. Low-Temperature Reactivity Characterization

The oxygen storage material powder after high-temperature aging and Rh/Al₂O₃ powder loaded with Rh (0.5 wt%) are physically mixed in a mortar at a mass ratio of 1:1, then pressed into pellets, and crushed to obtain the tablet-shaped automobile tail gas purification catalysts with diameters of 0.5-1 mm.

20 mg of the obtained catalyst is weighed, and the oxygen absorption and desorption capacity is measured using a thermogravimetric analyzer. The oxygen absorption and desorption capacity is defined as that for 20 mg of the catalyst at 250 °C (O₂-mg/cat-20 mg). The above catalyst sample is placed in the sample pan of the thermogravimetric analyzer. Under a temperature of 250 °C, the 20 mg of catalyst is alternately exposed every 20 minutes to a reducing gas composed of H₂ (4 vol%) and N₂ (96 vol%) and an oxidizing gas composed of O₂ (5 vol%) and N₂ (95 vol%) at a flow rate of 100 mL/min for a total of 120 minutes (reduction-oxidation cycles repeated three times). The oxygen absorption and desorption capacity is obtained from the reversible weight changes measured by the thermogravimetric analyzer. The values on the oxygen desorption side (reducing side) are used for evaluation.

Sample Description: sample in the freshly prepared state (before aging) and sample after high-temperature aging at 1000 °C (after aging).

### Embodiment 1:

A preparation method of a low-temperature high-performance oxygen storage material is provided, which comprises the following steps:
S01: weighing cerium nitrate, zirconium carbonate, lanthanum nitrate, and yttrium nitrate, dissolving the cerium nitrate, the lanthanum nitrate, and the yttrium nitrate in a hydrogen peroxide aqueous solution, and dissolving the zirconium carbonate in a nitric acid aqueous solution, and then mixing and stirring the above solutions uniformly to obtain a solution A1;
S02: weighing ammonium carbonate and dissolving the ammonium carbonate in deionized water, and preparing a mixed solution A2 of the ammonium carbonate and the ammonia water at a molar ratio of 1:1;
S03: weighing α-alumina powder with an average particle size of 10 nm and adding the α-alumina powder to an ethanol-water solution, performing ultrasonic dispersion for 5 minutes, then adding a silane coupling agent (γ-aminopropyltrimethoxysilane) in an amount equal to 1 wt% of the mass of nanoparticles, and performing ultrasonic treatment for 10 minutes to obtain a slurry A3;
S04: jointly titrating and precipitating the solution A1, the solution A2, and the slurry A3 at 30 °C, and after completion of the titration, adding a concentrated ammonia solution to the mixture and stirring for 2 hours to obtain a slurry B;
S05: transferring the slurry B to 15 °C for low-temperature aging for 3 hours, then transferring to 98 °C for high-temperature aging for 2 hours, and then cooling the slurry to room temperature to obtain a slurry C;
S06: heating the slurry C to 70 °C, then adding concentrated ammonia water, lauric acid, and polyvinyl alcohol to the slurry C, stirring the reaction for 3 hours, and then cooling the slurry to room temperature to obtain a slurry D; and
S07: performing suction filtration and washing on the obtained slurry D, then drying and roasting the resulting filter cake at 400-800 °C for 6 hours with a heating rate of 5-20 °C/min, and ultimately obtaining the low-temperature high-performance oxygen storage material.

In the obtained low-temperature high-performance oxygen storage material, by weight, the content of cerium oxide is 40 wt%, the content of zirconium oxide is 50 wt%, the metal-modified doping additives are lanthanum oxide and yttrium oxide, each accounting for 4.5 wt%, and the content of α-alumina is 1 wt%.

Embodiment 2: Compared with the embodiment 1, in S05, the slurry B is transferred to 25 °C for low-temperature aging for 8 hours.

Specifically, a preparation method of a low-temperature high-performance oxygen storage material is provided, which comprises the following steps:
S01: weighing cerium nitrate, zirconium carbonate, lanthanum nitrate, and yttrium nitrate, dissolving the cerium nitrate, the lanthanum nitrate, and the yttrium nitrate in a hydrogen peroxide aqueous solution, and dissolving the zirconium carbonate in a nitric acid aqueous solution, and then mixing and stirring the above solutions uniformly to obtain a solution A1;
S02: weighing ammonium carbonate and dissolving the ammonium carbonate in deionized water, and preparing a mixed solution A2 of the ammonium carbonate and the ammonia water at a molar ratio of 1:1;
S03: weighing α-alumina powder with an average particle size of 10 nm and adding the α-alumina powder to an ethanol-water solution, performing ultrasonic dispersion for 5 minutes, then adding a silane coupling agent (γ-aminopropyltrimethoxysilane) in an amount equal to 1 wt% of the mass of nanoparticles, and performing ultrasonic treatment for 10 minutes to obtain a slurry A3;
S04: jointly titrating and precipitating the solution A1, the solution A2, and the slurry A3 at 30 °C, and after completion of the titration, adding a concentrated ammonia solution to the mixture and stirring for 2 hours to obtain a slurry B;
S05: transferring the slurry B to 25 °C for low-temperature aging for 8 hours, then transferring to 98 °C for high-temperature aging for 2 hours, and then cooling the slurry to room temperature to obtain a slurry C;
S06: heating the slurry C to 70 °C, then adding concentrated ammonia water, lauric acid, and polyvinyl alcohol to the slurry C, stirring the reaction for 3 hours, and then cooling the slurry to room temperature to obtain a slurry D; and
S07: performing suction filtration and washing on the obtained slurry D, then drying and roasting the resulting filter cake at 400-800 °C for 6 hours with a heating rate of 5-20 °C/min, and ultimately obtaining the low-temperature high-performance oxygen storage material.

In the obtained low-temperature high-performance oxygen storage material, by weight, the content of cerium oxide is 40 wt%, the content of zirconium oxide is 50 wt%, the metal-modified doping additives are lanthanum oxide and yttrium oxide, each accounting for 4.5 wt%, and the content of α-alumina is 1 wt%.

Embodiment 3: Compared with the embodiment 1, the nanoparticles are nanosilica with an average particle size of 20 nm.

Specifically, a preparation method of a low-temperature high-performance oxygen storage material is provided, which comprises the following steps:
S01: weighing cerium nitrate, zirconium carbonate, lanthanum nitrate, and yttrium nitrate, dissolving the cerium nitrate, the lanthanum nitrate, and the yttrium nitrate in a hydrogen peroxide aqueous solution, and dissolving the zirconium carbonate in a nitric acid aqueous solution, and then mixing and stirring the above solutions uniformly to obtain a solution A1;
S02: weighing ammonium carbonate and dissolving the ammonium carbonate in deionized water, and preparing a mixed solution A2 of the ammonium carbonate and the ammonia water at a molar ratio of 1:1;
S03: weighing nanosilica with an average particle size of 20 nm and adding the nanosilica to an ethanol-water solution, performing ultrasonic dispersion for 5 minutes, then adding a silane coupling agent (γ-aminopropyltrimethoxysilane) in an amount equal to 1 wt% of the mass of nanoparticles, and performing ultrasonic treatment for 10 minutes to obtain a slurry A3;
S04: jointly titrating and precipitating the solution A1, the solution A2, and the slurry A3 at 30 °C, and after completion of the titration, adding a concentrated ammonia solution to the mixture and stirring for 2 hours to obtain a slurry B;
S05: transferring the slurry B to 15 °C for low-temperature aging for 3 hours, then transferring to 98 °C for high-temperature aging for 2 hours, and then cooling the slurry to room temperature to obtain a slurry C;
S06: heating the slurry C to 70 °C, then adding concentrated ammonia water, lauric acid, and polyvinyl alcohol to the slurry C, stirring the reaction for 3 hours, and then cooling the slurry to room temperature to obtain a slurry D; and
S07: performing suction filtration and washing on the obtained slurry D, then drying and roasting the resulting filter cake at 400-800 °C for 6 hours with a heating rate of 5-20 °C/min, and ultimately obtaining the low-temperature high-performance oxygen storage material.

In the obtained low-temperature high-performance oxygen storage material, by weight, the content of cerium oxide is 40 wt%, the content of zirconium oxide is 50 wt%, the metal-modified doping additives are lanthanum oxide and yttrium oxide, each accounting for 4.5 wt%, and the content of nanosilica is 1 wt%.

Embodiment 4: Compared with the embodiment 1, the α-alumina powder has an average particle size of 30 nm, and the nanoparticles are pretreated and modified as follows: α-alumina powder of the specified particle size are weighed and added to an ethanol-water solution, ultrasonic dispersion is performed for 5 minutes, then γ-aminopropyltriethoxysilane in an amount equal to 0.5 wt% of the mass of nanoparticles is added, and ultrasonic treatment is performed for 10 minutes to obtain a slurry A3.

Specifically, a preparation method of a low-temperature high-performance oxygen storage material is provided, which comprises the following steps:
S01: weighing cerium nitrate, zirconium carbonate, lanthanum nitrate, and yttrium nitrate, dissolving the cerium nitrate, the lanthanum nitrate, and the yttrium nitrate in a hydrogen peroxide aqueous solution, and dissolving zirconium carbonate in a nitric acid aqueous solution, and then mixing and stirring the above solutions uniformly to obtain a solution A1;
S02: weighing ammonium carbonate and dissolving the ammonium carbonate in deionized water, and preparing a mixed solution A2 of the ammonium carbonate and the ammonia water at a molar ratio of 1:1;
S03: weighing α-alumina powder with an average particle size of 30 nm and adding the α-alumina powder to an ethanol-water solution, performing ultrasonic dispersion for 5 minutes, then adding a silane coupling agent (γ-aminopropyltriethoxysilane) in an amount equal to 0.5 wt% of the mass of nanoparticles, and performing ultrasonic treatment for 10 minutes to obtain a slurry A3;
S04: jointly titrating and precipitating the solution A1, the solution A2, and the slurry A3 at 30 °C, and after completion of the titration, adding a concentrated ammonia solution to the mixture and stirring for 2 hours to obtain a slurry B;
S05: transferring the slurry B to 15 °C for low-temperature aging for 3 hours, then transferring to 98 °C for high-temperature aging for 2 hours, and then cooling the slurry to room temperature to obtain a slurry C;
S06: heating the slurry C to 70 °C, then adding concentrated ammonia water, lauric acid, and polyvinyl alcohol to the slurry C, stirring the reaction for 3 hours, and then cooling the slurry to room temperature to obtain a slurry D; and
S07: performing suction filtration and washing on the obtained slurry D, then drying and roasting the resulting filter cake at 400-800 °C for 6 hours with a heating rate of 5-20 °C/min, and ultimately obtaining the low-temperature high-performance oxygen storage material.

In the obtained low-temperature high-performance oxygen storage material, by weight, the content of cerium oxide is 40 wt%, the content of zirconium oxide is 50 wt%, the metal-modified doping additives are lanthanum oxide and yttrium oxide, each accounting for 4.5 wt%, and the content of α-alumina is 1 wt%.

Comparative Embodiment 1: Compared with the embodiment 1, α-alumina powder without pre-treatment modification is used.

Specifically, a preparation method of a low-temperature high-performance oxygen storage material is provided, which comprises the following steps:
S01: weighing cerium nitrate, zirconium carbonate, lanthanum nitrate, and yttrium nitrate, dissolving the cerium nitrate, the lanthanum nitrate, and the yttrium nitrate in a hydrogen peroxide aqueous solution, and dissolving the zirconium carbonate in a nitric acid aqueous solution, and then mixing and stirring the above solutions uniformly to obtain a solution A1;
S02: weighing ammonium carbonate and dissolving the ammonium carbonate in deionized water, and preparing a mixed solution A2 of the ammonium carbonate and the ammonia water at a molar ratio of 1:1;
S03: jointly titrating and precipitating the solution A1 and the solution A2 at 30 °C, and after completion of the titration, adding a concentrated ammonia solution to the mixture and stirring for 2 hours to obtain a slurry B;
S04: transferring the slurry B to 15 °C for low-temperature aging for 3 hours, then transferring to 98 °C for high-temperature aging for 2 hours, and then cooling the slurry to room temperature to obtain a slurry C;
S05: heating the slurry C to 70 °C, then adding concentrated ammonia water, lauric acid, and polyvinyl alcohol to the slurry C, stirring the reaction for 3 hours, and then cooling the slurry to room temperature to obtain a slurry D; and
S06: performing suction filtration and washing on the obtained slurry D, then drying and roasting the resulting filter cake at 400-800 °C for 6 hours with a heating rate of 5-20 °C/min, and ultimately obtaining the low-temperature high-performance oxygen storage material.

In the obtained low-temperature high-performance oxygen storage material, by weight, the content of cerium oxide is 40 wt%, the content of zirconium oxide is 50 wt%, and the metal-modified doping additives are lanthanum oxide and yttrium oxide, each accounting for 5 wt%.

Comparative Embodiment 2: Compared with the embodiment 1, the added α-alumina powder is not subjected to the pre-treatment modification in S03.

Specifically, a preparation method of a low-temperature high-performance oxygen storage material is provided, which comprises the following steps:
S01: weighing cerium nitrate, zirconium carbonate, lanthanum nitrate, and yttrium nitrate, dissolving the cerium nitrate, the lanthanum nitrate, and the yttrium nitrate in a hydrogen peroxide aqueous solution, and dissolving the zirconium carbonate in a nitric acid aqueous solution, and then mixing and stirring the above solutions uniformly to obtain a solution A1;
S02: weighing ammonium carbonate and dissolving the ammonium carbonate in deionized water, and preparing a mixed solution A2 of the ammonium carbonate and the ammonia water at a molar ratio of 1:1;
S03: weighing α-alumina powder with an average particle size of 10 nm and adding the α-alumina powder to an ethanol-water solution, performing ultrasonic dispersion for 5 minutes obtain a slurry A3;
S04: jointly titrating and precipitating the solution A1, the solution A2, and the slurry A3 at 30 °C, and after completion of the titration, adding a concentrated ammonia solution to the mixture and stirring for 2 hours to obtain a slurry B;
S05: transferring the slurry B to 15 °C for low-temperature aging for 3 hours, then transferring to 98 °C for high-temperature aging for 2 hours, and then cooling the slurry to room temperature to obtain a slurry C;
S06: heating the slurry C to 70 °C, then adding concentrated ammonia water, lauric acid, and polyvinyl alcohol to the slurry C, stirring the reaction for 3 hours, and then cooling the slurry to room temperature to obtain a slurry D; and
S07: performing suction filtration and washing on the obtained slurry D, then drying and roasting the resulting filter cake at 400-800 °C for 6 hours with a heating rate of 5-20 °C/min, and ultimately obtaining the low-temperature high-performance oxygen storage material.

In the obtained low-temperature high-performance oxygen storage material, by weight, the content of cerium oxide is 40 wt%, the content of zirconium oxide is 50 wt%, the metal-modified doping additives are lanthanum oxide and yttrium oxide, each accounting for 4.5 wt%, and the content of α-alumina is 1 wt%.

Comparative Embodiment 3: Compared with the embodiment 1, in S05, the slurry B is directly transferred to 98 °C for high-temperature aging for 5 hours, and then the slurry is cooled to room temperature to obtain a slurry C (without undergoing low-temperature aging).

Specifically, a preparation method of a low-temperature high-performance oxygen storage material is provided, which comprises the following steps:
S01: weighing cerium nitrate, zirconium carbonate, lanthanum nitrate, and yttrium nitrate, dissolving the cerium nitrate, the lanthanum nitrate, and the yttrium nitrate in a hydrogen peroxide aqueous solution, and dissolving the zirconium carbonate in a nitric acid aqueous solution, and then mixing and stirring the above solutions uniformly to obtain a solution A1;
S02: weighing ammonium carbonate and dissolving the ammonium carbonate in deionized water, and preparing a mixed solution A2 of the ammonium carbonate and the ammonia water at a molar ratio of 1:1;
S03: weighing α-alumina powder with an average particle size of 10 nm and adding the α-alumina powder to an ethanol-water solution, performing ultrasonic dispersion for 5 minutes, then adding a silane coupling agent (γ-aminopropyltrimethoxysilane) in an amount equal to 1 wt% of the mass of nanoparticles, and performing ultrasonic treatment for 10 minutes to obtain a slurry A3;
S04: jointly titrating and precipitating the solution A1, the solution A2, and the slurry A3 at 30 °C, and after completion of the titration, adding a concentrated ammonia solution to the mixture and stirring for 2 hours to obtain a slurry B;
S05: transferring the slurry B to 98 °C for high-temperature aging for 2 hours, and then cooling the slurry to room temperature to obtain a slurry C;
S06: heating the slurry C to 70 °C, then adding concentrated ammonia water, lauric acid, and polyvinyl alcohol to the slurry C, stirring the reaction for 3 hours, and then cooling the slurry to room temperature to obtain a slurry D; and
S07: performing suction filtration and washing on the obtained slurry D, then drying and roasting the resulting filter cake at 400-800 °C for 6 hours with a heating rate of 5-20 °C/min, and ultimately obtaining the low-temperature high-performance oxygen storage material.

In the obtained low-temperature high-performance oxygen storage material, by weight, the content of cerium oxide is 40 wt%, the content of zirconium oxide is 50 wt%, the metal-modified doping additives are lanthanum oxide and yttrium oxide, each accounting for 4.5 wt%, and the content of α-alumina is 1 wt%.

Comparative Embodiment 4: Compared with the embodiment 1, γ-alumina powder with pre-treatment modification is used.

Specifically, a preparation method of a low-temperature high-performance oxygen storage material is provided, which comprises the following steps:
S01: weighing cerium nitrate, zirconium carbonate, lanthanum nitrate, and yttrium nitrate, dissolving the cerium nitrate, the lanthanum nitrate, and the yttrium nitrate in a hydrogen peroxide aqueous solution, and dissolving the zirconium carbonate in a nitric acid aqueous solution, and then mixing and stirring the above solutions uniformly to obtain a solution A1;
S02: weighing ammonium carbonate and dissolving the ammonium carbonate in deionized water, and preparing a mixed solution A2 of the ammonium carbonate and the ammonia water at a molar ratio of 1:1;
S03: weighing γ-alumina powder with an average particle size of 10 nm and adding the γ-alumina powder to an ethanol-water solution, performing ultrasonic dispersion for 5 minutes, then adding a silane coupling agent (γ-aminopropyltrimethoxysilane) in an amount equal to 1 wt% of the mass of nanoparticles, and performing ultrasonic treatment for 10 minutes to obtain a slurry A3;
S04: jointly titrating and precipitating the solution A1, the solution A2, and the slurry A3 at 30 °C, and after completion of the titration, adding a concentrated ammonia solution to the mixture and stirring for 2 hours to obtain a slurry B;
S05: transferring the slurry B to 15 °C for low-temperature aging for 3 hours, then transferring to 98 °C for high-temperature aging for 2 hours, and then cooling the slurry to room temperature to obtain a slurry C;
S06: heating the slurry C to 70 °C, then adding concentrated ammonia water, lauric acid, and polyvinyl alcohol to the slurry C, stirring the reaction for 3 hours, and then cooling the slurry to room temperature to obtain a slurry D; and
S07: performing suction filtration and washing on the obtained slurry D, then drying and roasting the resulting filter cake at 400-800 °C for 6 hours with a heating rate of 5-20 °C/min, and ultimately obtaining the low-temperature high-performance oxygen storage material.

In the obtained low-temperature high-performance oxygen storage material, by weight, the content of cerium oxide is 40 wt%, the content of zirconium oxide is 50 wt%, the metal-modified doping additives are lanthanum oxide and yttrium oxide, each accounting for 4.5 wt%, and the content of γ-alumina is 1 wt%.

| | Specific Surface Area Before Aging (m²/g) | Specific Surface Area After Aging (m²/g) | Reaction activity at 250 °C (O2-mg/cat-10mg) |
|---|---|---|---|
| Embodiment 1 | 96.7 | 56.3 | 0.112 |
| Embodiment 2 | 94.3 | 55.7 | 0.095 |
| Embodiment 3 | 95.2 | 55.6 | 0.102 |
| Embodiment 4 | 92.7 | 54.7 | 0.093 |
| Comparative Embodiment 1 | 75.4 | 24.5 | 0.035 |
| Comparative Embodiment 2 | 84.3 | 33.7 | 0.075 |
| Comparative Embodiment 3 | 89.7 | 47.7 | 0.070 |
| Comparative Embodiment 4 | 95.4 | 44.4 | 0.033 |

From the test data in the table, it can be seen that the oxygen storage materials prepared in the embodiments exhibit very high specific surface area, excellent high-temperature aging resistance, and superior reaction activity at low temperatures.

From the test data of the embodiment 1 and the comparative embodiment 1, it can be seen that without the addition of α-alumina powder with pre-treatment modification, the oxygen storage material exhibits decreased specific surface area, high-temperature aging resistance, and low-temperature reaction activity, with a significant decline in all these properties.

From the test data of the embodiment 1 and the comparative embodiment 2, it can be seen that the nanoparticles with pre-treatment modification are crucial for effectively enhancing the specific surface area and reaction activity after aging. The nanoparticles serve as nucleation sites for cerium-zirconium nanocrystals; however, aggregation tends to occur. Therefore, the purpose of modification is to prevent nanoparticles agglomeration and promote dispersion, which facilitates the nucleation and growth of the oxygen storage material, and additionally, the introduction of silicon further enhances the performance of the oxygen storage material.

From the test data of the embodiment 1 and the comparative embodiment 3, it can be seen that low-temperature aging is crucial for effectively enhancing the specific surface area and reaction activity after aging. Compared with the room-temperature aging in the prior art, the present application performs low-temperature aging followed by high-temperature aging, and then cools the material to room temperature. The low-temperature aging is selected first to reduce nucleation of the cerium-zirconium compound itself and favor nucleation on the modified nanoparticles, and a period of low-temperature aging allows uniform nucleation and growth of all grains in the system.

From the test data of the embodiment 1 and the comparative embodiment 4, it can be seen that when the nanoparticles are replaced with γ-alumina powder, although the fresh oxygen storage material exhibits a higher specific surface area, its aged specific surface area decreases. This is likely due to the poor thermal stability of γ-alumina. In addition, it is unexpectedly found that γ-alumina significantly reduces low-temperature reaction activity, which may be related to the different crystal planes exposed by γ-alumina and α-alumina during the induction of cerium-zirconium nanocrystal growth.

In the description of the present application, it should be noted that the orientation or positional relationships indicated by terms such as "upper", "lower", etc., are based on the orientations or positional relationships shown in the drawings, and are used solely for the convenience of describing the present application and simplifying the description. These terms do not indicate or imply that the device or component referred to must have a specific orientation or be constructed and operated in a particular orientation. Therefore, these terms should not be understood as limiting the scope of the present application. Unless otherwise clearly specified and limited, the terms "installation", "connected" and "connection" should be understood in a broad sense. For example, it can be a fixed connection, a detachable connection, or an integral connection; further can be a mechanical connection, or an electrical connection; further can be directly connected, or indirectly connected through an intermediate medium, or can be the internal communication between two components. For those of ordinary skill in the art, the specific meanings of the above-mentioned terms in the present application can be understood according to specific circumstances.

It should be noted that relational terms such as "first" and "second" are only for distinguishing one entity or operation from another entity or operation in this the present invention, and do not necessarily require or imply any such actual relationship or order between these entities or operations. Moreover, the terms "include", "comprise" or any other variants thereof are intended to cover non-exclusive inclusion, so that a process, method, article or device comprising a series of elements not only comprises those elements, but also comprises those that are not explicitly listed, or further comprises elements inherent to the process, method, article, or device. If there are no more restrictions, the elements defined by the sentence "comprising a..." does not exclude the existence of other same elements in the process, method, article, or device comprising the elements.

The above-mentioned are only the embodiments of the present application, so that those skilled in the art can understand or implement the present application. For those skilled in the art, various modifications to these embodiments will be obvious, and the general principles defined herein can be implemented in other embodiments without departing from the spirit or scope of the present application. Therefore, the present application will not be limited to the embodiments shown in this document, but will be subject to the widest scope consistent with the principles and novel features applied herein.

## Claims

1. A preparation method of a low-temperature high-performance oxygen storage material, comprising the following steps:
preparing a solution A1, wherein the solution A1 comprises cerium, zirconium, and a metal-modified doping element for modifying the cerium and the zirconium;
preparing a solution A2, wherein the solution A2 comprises ammonium carbonate and ammonia water;
utilizing a silane coupling agent to modify nanoparticles to obtain a slurry A3;
jointly titrating and precipitating the solution A1, the solution A2, and the slurry A3, and after completion of the titration, adding concentrated ammonia water and stirring to obtain a slurry B;
successively performing low-temperature aging treatment and high-temperature aging treatment on the slurry B to obtain a slurry C;
heating the slurry C to a set temperature, then adding concentrated ammonia water and a surfactant into the slurry C, and performing a stirring reaction to obtain a slurry D; and
performing suction filtration and washing on the slurry D, and drying and roasting a filter cake obtained by the suction filtration and washing, to obtain the low-temperature high-performance oxygen storage material.

2. The preparation method of the low-temperature high-performance oxygen storage material according to claim 1, wherein in the low-temperature high-performance oxygen storage material, by weight fraction, a content of cerium oxide is 20-60 wt%, a content of zirconium oxide is 30-70 wt%, a content of a metal-modified doping additive is 3-15 wt%, and a content of nanoparticles is 0.1-3 wt%.

3. The preparation method of the low-temperature high-performance oxygen storage material according to claim 1, wherein the step of preparing the solution A1 specifically comprises:
dissolving a soluble cerium salt in hydrogen peroxide, dissolving a soluble zirconium salt in an aqueous nitric acid solution, dissolving a soluble salt of the metal-modified doping element in hydrogen peroxide, and then mixing and stirring uniformly to obtain the solution A1.

4. The preparation method of the low-temperature high-performance oxygen storage material according to claim 3, wherein
the soluble cerium salt comprises cerium nitrate and/or cerium carbonate;
the soluble zirconium salt comprises zirconium nitrate and/or zirconium carbonate; and
the soluble salt of the metal-modified doping element comprises a nitrate and/or a carbonate of the metal-modified doping element.

5. The preparation method of the low-temperature high-performance oxygen storage material according to claim 1, wherein the metal-modified doping element comprises one or more of an aluminum element, a rare earth element, a transition metal element, an alkali metal element, and an alkaline earth metal element.

6. The preparation method of the low-temperature high-performance oxygen storage material according to claim 1, wherein the step of preparing the solution A2 specifically comprises:
dissolving the ammonium carbonate in water to obtain an ammonium carbonate solution; and
mixing the ammonium carbonate solution with the ammonia water to obtain the solution A2.

7. The preparation method of the low-temperature high-performance oxygen storage material according to claim 6, wherein a molar ratio of the ammonium carbonate solution to the ammonia water is (0.5~2):1.

8. The preparation method of the low-temperature high-performance oxygen storage material according to claim 1, wherein the step of utilizing the silane coupling agent to modify nanoparticles to obtain the slurry A3 specifically comprises:
adding the nanoparticles into a solvent and performing ultrasonic dispersion, then adding the silane coupling agent and performing ultrasonic treatment again to obtain the slurry A3, wherein an amount of the silane coupling agent added is 0.5-2 wt% of the mass of the nanoparticles.

9. The preparation method of the low-temperature high-performance oxygen storage material according to claim 1, wherein the nanoparticles comprise nanosilica and/or nano α-alumina powder.

10. The preparation method of the low-temperature high-performance oxygen storage material according to claim 1, wherein the nanoparticles have an average particle size of 5~30 nm.

11. The preparation method of the low-temperature high-performance oxygen storage material according to claim 1, wherein the silane coupling agent comprises an aminoalkyl-type silane coupling agent.

12. The preparation method of the low-temperature high-performance oxygen storage material according to claim 11, wherein the aminoalkyl-type silane coupling agent comprises one or more of γ-aminopropyltrimethoxysilane, γ-aminopropyltriethoxysilane, γ-ureapropyltriethoxysilane, and γ-(β-aminoethyl)aminopropyltrimethoxysilane.

13. The preparation method of the low-temperature high-performance oxygen storage material according to claim 1, wherein the low-temperature aging treatment comprises aging at 15-25 °C for 3-8 hours.

14. The preparation method of the low-temperature high-performance oxygen storage material according to claim 1, wherein the high-temperature aging treatment comprises aging at 90-98 °C for 2-5 hours.

15. The preparation method of the low-temperature high-performance oxygen storage material according to claim 1, wherein the set temperature is 50-70 °C.

16. The preparation method of the low-temperature high-performance oxygen storage material according to claim 1, wherein the surfactant is a mixture of a fatty acid and polyvinyl alcohol, or a mixture of a carboxylate ester and polyvinyl alcohol.

17. The preparation method of the low-temperature high-performance oxygen storage material according to claim 16, wherein
the fatty acid comprises one or more of lauric acid, palmitic acid, stearic acid, and oleic acid; and
the carboxylate ester comprises one or more of Tween 20, Tween 60, and Tween 80.

18. The preparation method of the low-temperature high-performance oxygen storage material according to claim 1, wherein the roasting comprises heating at a rate of 5-20 °C/min to 400-800 °C, followed by roasting for 3-6 hours.

19. A low-temperature high-performance oxygen storage material, wherein the low-temperature high-performance oxygen storage material is prepared by the preparation method of the low-temperature high-performance oxygen storage material according to any one of claims 1 to 18.

20. An automobile tail gas purification catalyst, wherein the automobile tail gas purification catalyst comprises the low-temperature high-performance oxygen storage material according to claim 19.
